# EUROPEAN PATENT APPLICATION

(11) **EP 3 427 998 A1**
(43) Date of publication of application: **16.01.2019**
(21) Application number: 16893580.7
(22) Date of filing: 12.10.2016
(51) Int. Cl.: B60L 11/18, B62M 6/45, H01M 10/44, H01M 10/48, H01M 10/613, H01M 10/615, H01M 10/625, H01M 10/633, H01M 10/667, H02J 7/00

(54) **DRIVE DEVICE FOR ELECTRICALLY ASSISTED VEHICLE, ELECTRICALLY ASSISTED VEHICLE, AND ELECTRICITY STORAGE DEVICE**

(30) Priority: 11.03.2016 JP 2016048311
(71) Applicant: Taiyo Yuden Co., Ltd., Tokyo 104-0031 (JP)
(72) Inventor: HOSAKA Yasuo, Tokyo 104-0031 (JP); JINDAI Ken, Tokyo 104-0031 (JP); YANAOKA Taichi, Tokyo 104-0031 (JP)
(74) Representative: Müller-Boré & Partner Patentanwälte PartG mbB
(86) International application number: PCT/JP2016/080172
(87) International publication number: WO 2017/154256

(57) **Abstract**

It is aimed to enable a braking force by a drive force and regeneration to be stably obtained by maintaining an electricity storage element in a proper temperature range. A drive device for electrically assisted vehicle drives a motor (105) of an electrically assisted vehicle by power of an electricity storage element (201) and charges the electricity storage element (201) by power generated during a regenerating operation of the motor (105). The drive device obtains an electricity storage element temperature which is a temperature of the electricity storage element (201), and controls a heating connection switching device (220) to thermally connect the electricity storage element (201) to a motor drive control device (100) when the electricity storage element temperature is lower than a first predetermined value. The drive device thermally separates the electricity storage element (201) and the motor drive control device (100) when the electricity storage element temperature is equal to or higher than the first predetermined value. The drive device thermally connects the electricity storage element (201) to a predetermined part (frame (11) or the like) of the electrically assisted vehicle having a lower temperature than the motor drive control device (100) when the electricity storage element temperature is equal to or higher than the first predetermined value.

## Description

### Technical Field

The present invention relates to a drive device for electrically assisted vehicle, an electrically assisted vehicle and an electricity storage device.

### Background Art

Patent literature 1 describes a battery temperature control device configured, such as for the purpose of preventing an output, a capacity and a life of a battery from declining by controlling a battery temperature to be constantly an optimal operating temperature. The battery temperature control device includes a motor for driving a vehicle, a battery for supplying power to the motor, the battery having an optimal operating temperature near a normal temperature, a heat generating member for generating heat by the start-up of the vehicle, a radiator for radiating heat generated by the battery to the outside of the vehicle, a heater core for radiating the heat generated by the battery to a vehicle interior, a battery temperature detection sensor for detecting a battery temperature, and a control circuit for heating the battery by the heat generated by the heat generating member if the battery temperature is lower than a proper range, causing the radiator to radiate the heat generated by the battery to the outside of the vehicle when the vehicle interior is not heated and the battery temperature is higher than the proper range, and causing the heater core to radiate the heat generated by the battery and the heat generating member when the vehicle interior is heated and the battery temperature is higher than the proper range.

Patent literature 2 describes a battery control device configured, such as for the purpose of preventing a decline of inputtable/outputtable power of a battery due to a temperature decrease. The battery control device includes battery temperature detection means for detecting a temperature of a battery, a state of charge determination means for determining a state of charge of the battery and battery control means for controlling the charge and discharge of the battery, wherein the battery control means repeats the charge and discharge of the battery in a predetermined region equal to or higher than a threshold value if the battery temperature detected by the battery temperature determination means is equal to or lower than a predetermined value and the state of charge of the battery determined by the state of charge determination means is equal to or higher than the threshold value set in advance, and repeats the charge and discharge of the battery in a predetermined region lower than the threshold value when the state of charge of the battery is lower than the threshold value.

### Citation list

### Patent Literature

Patent literature 1: Japanese Unexamined Patent Application No. H06-24238
Patent literature 2: Japanese Unexamined Patent Application No. 2003-272712

### Summary of Invention

### Technical Problem

A technique is known which obtains a braking force by regeneration by charging an electricity storage element by power generated during a regenerating operation of a motor in an electrically assisted vehicle with a mechanism for assisting human power by driving the motor by power stored in the electricity storage element. Here, charge/discharge performance of the electricity storage element such as a lithium ion secondary battery used in the electrically assisted vehicle decreases at low temperatures such as in winter and at high temperatures such as in summer. Thus, it is a problem that a braking force by a drive force and regeneration is not necessarily sufficiently obtained. For example, since charging performance decreases when the electricity storage element reaches a low temperature such as in winter, a braking force by regeneration cannot be sufficiently obtained and a driver may feel, for example, a sense of incongruity or a sense of fear while driving downhill, which could become a cause for reducing a product appeal. Further, such as in summer, the electricity storage element may reach a high temperature with a temperature increase associated with discharge as an additional factor. To protect the battery, the charge and discharge of the battery are limited by a control device of the battery. Thus, a braking force by a drive force and regeneration may be limited.

The present invention was developed in view of such problems and aims to provide a drive device for electrically assisted vehicle, an electrically assisted vehicle and an electricity storage device capable of stably obtaining a braking force by a drive force and regeneration by maintaining an electricity storage element in a proper temperature range.

### Solution to Problem

One aspect of the present invention is directed to a drive device for electrically assisted vehicle, the drive device including a motor drive control device for driving a motor provided in an electrically assisted vehicle by power stored in an electricity storage element and charging the electricity storage element by power generated during a regenerating operation of the motor, an electricity storage element temperature acquisition unit for obtaining an electricity storage element temperature which is a temperature of the electri city storage element, a heating connection switching device for thermally connecting or separating the electricity storage element and the motor drive control device, and a heating connection switching control unit for controlling the heating connection switching device to thermally connect the electricity storage element to the motor drive control device when the electricity storage element temperature is lower than a first predetermined value.

According to the present invention, since the electricity storage element is heated utilizing heat of the motor drive control device when the electricity storage element temperature is lower than the first predetermined value, it can be prevented that the electricity storage element reaches a low temperature to reduce charge/discharge performance and a braking force by a drive force and regeneration can be stably obtained by maintaining the electricity storage element in a proper temperature range.

According to another aspect of the present invention, in the drive device for electrically assisted vehicle, the heating connection switching control unit controls the heating connection switching device to thermally separate the electricity storage element and the motor drive control device when the electricity storage element temperature is equal to or higher than the first predetermined value.

Since the electricity storage element and the motor drive control device are thermally separated in this way when the electricity storage element temperature is equal to or higher than the first predetermined value, it can be prevented that the electricity storage element reaches a high temperature due to the heat of the motor drive control device to reduce charge/discharge performance.

According to another aspect of the present invention, in the drive device for electrically assisted vehicle, the heating connection switching control unit controls the heating connection switching device to thermally connect the electricity storage element and a predetermined part of the electrically assisted vehicle when the electricity storage element temperature is equal to or higher than the first predetermined value.

Since the electricity storage element and the predetermined part (frame, seat tube, hanger tube, chain stay, front pipe or the like) of the electrically assisted vehicle are thermally connected in this way when the electricity storage element temperature is equal to or higher than the first predetermined value, heat of the electricity storage element can be allowed to escape to the predetermined part and it can be prevented that the electricity storage element reaches a high temperature to reduce charge/discharge performance.

According to another aspect of the present invention, in the drive device for electrically assisted vehicle, the heating connection switching control unit controls the heating connection switching device to thermally separate the electricity storage element and the motor drive control device when the electricity storage element temperature is equal to or higher than the sum of the first predetermined value and a predetermined hysteresis width value.

By providing the predetermined hysteresis width value for the first predetermined value in this way, the chattering of the heating connection switching device can be prevented.

According to another aspect of the present invention, the drive device for electrically assisted vehicle further includes a motor drive control device temperature acquisition unit for obtaining a motor drive control device temperature which is a temperature of the motor drive control device, and the heating connection switching control unit controls the heating connection switching device to thermally separate the electricity storage element and the motor drive control device when the electricity storage element temperature is lower than the first predetermined value and the motor drive control device temperature is equal to or lower than a second predetermined value.

Since the electricity storage element and the motor drive control device are thermally separated in this way when the motor drive control device temperature is low (equal to or lower than the second predetermined value), it can be prevented that the electricity storage element reaches a low temperature to reduce charge/discharge performance by having the motor drive control device thermally connected thereto when the motor drive control device temperature is low like in winter.

According to another aspect of the present invention, the drive device for electrically assisted vehicle further includes a predetermined part temperature acquisition unit for obtaining a predetermined part temperature which is a temperature of the predetermined part, and the heating connection switching control unit controls the heating connection switching device to thermally separate the electricity storage element and the predetermined part when the electricity storage element temperature is equal to or higher than the first predetermined value and the predetermined part temperature is equal to or higher than a third predetermined value.

Since the electricity storage element and the predetermined part are thermally separated in this way when the predetermined part temperature is high (equal to or higher than the third predetermined value), it can be prevented that the electricity storage element reaches a high temperature to reduce charge/discharge performance by having the predetermined part thermally connected thereto when the predetermined part temperature is high like in summer.

According to another aspect of the present invention, the drive device for electrically assisted vehicle further includes a predetermined part temperature acquisition unit for obtaining a predetermined part temperature which is a temperature of the predetermined part, and the heating connection switching control unit controls the heating connection switching device to thermally separate the electricity storage element and the predetermined part when the electricity storage element temperature is equal to or higher than the sum of the first predetermined value and the predetermined hysteresis width value and the predetermined part temperature is equal to or higher than the third predetermined value.

By providing the predetermined hysteresis width value in this way, the chattering of the heating connection switching device can be prevented.

According to another aspect of the present invention, in the drive device for electrically assisted vehicle, the electricity storage element has a regenerative charging possible temperature range which is a temperature range where charging by the regeneration control unit is possible, and the first predetermined value is set in the regenerative charging possible temperature range.

By setting the first predetermined value in the regenerative charging possible temperature range in this way, the electricity storage element can be heated before the electricity storage element temperature decreases to deviate from the regenerative charging possible temperature range.

According to another aspect of the present invention, the drive device for electrically assisted vehicle includes the heating connection switching device.

Another aspect of the present invention is directed to an electrically assisted vehicle including the above drive device.

Another aspect of the present invention is directed to an electricity storage device including the above electricity storage element and the above heating connection switching device.

Other problems disclosed by this application and solutions therefor will become more apparent through the description of embodiments of the present invention, drawings and the like.

### Advantageous Effects of Invention

According to the present invention, a braking force by a drive force and regeneration can be stably obtained by maintaining an electricity storage element in a proper temperature range.

### Brief Description of Drawings

FIG. 1 is a diagram showing the external appearance of an electrically assisted bicycle 1,
FIG. 2 is a diagram showing the configuration (block diagram) of a motor drive control device 100,
FIG. 3 is a diagram showing an example of mounting a motor control circuit 120 on the electrically assisted bicycle 1,
FIG. 4 is a perspective view showing the interior of a board case 131 obliquely viewed from above,
FIG. 5 is a diagram showing the configuration (block diagram) of a battery pack 200,
FIG. 6 is a diagram showing a configuration example of the battery pack 200 and a connector base 130,
FIG. 7 is an external view showing a state where a charger 30 used to charge the battery pack 200 and the battery pack 200 are connected,
FIG. 8 is a diagram showing functions of a battery pack-side control circuit 204 and data stored in the battery pack-side control circuit 204,
FIG. 9 is a graph showing an example of a method for limiting a regeneration amount according to a battery temperature,
FIG. 10A is a diagram showing one state of a heating connection switching device 220 by a heating connection switching control,
FIG. 10B is a diagram showing one state of the heating connection switching device 220 by the heating connection switching control,
FIG. 10C is a diagram showing one state of the heating connection switching device 220 by the heating connection switching control,
FIG. 11 is a chart showing a specific example (control method (1)) of the heating connection switching control,
FIG. 12 is a flow chart showing a heating connection switching process S1200,
FIG. 13A is a chart showing a control method by a control method (2) when a battery temperature changes from a low temperature to a high temperature,
FIG. 13B is a chart showing a control method by the control method (2) when a battery temperature changes from a high temperature to a low temperature,
FIG. 14 is a flow chart showing a heating connection switching process S1400,
FIG. 15A is a chart showing a control method by a control method (3) when the battery temperature changes from a low temperature to a high temperature (range where battery temperature < (TH+HYS)),
FIG. 15B is a chart showing a control method by the control method (3) when the battery temperature changes from a low temperature to a high temperature (range where battery temperature ≥ (TH+HYS)),
FIG. 15C is a chart showing a control method by the control method (3) when the battery temperature changes from a high temperature to a low temperature (range where battery temperature ≥ TH),
FIG. 15D is a chart showing a control method by the control method (3) when the battery temperature changes from a high temperature to a low temperature (range where battery temperature < TH),
FIG. 16 is a flow chart showing a heating connection switching process S1600,
FIG. 17 is a diagram showing the configuration (block diagram) of a motor drive control device 100 of a second embodiment,
FIG. 18 is a diagram showing the configuration (block diagram) of a battery pack 200 of the second embodiment,
FIG. 19 is a diagram showing a configuration example of the battery pack 200 and a connector base 130 of the second embodiment,
FIG. 20 is a diagram showing functions of a battery pack-side control circuit 204 of the battery pack 200 of the second embodiment and data stored in the battery pack-side control circuit 204,
FIG 21A is a diagram showing one state of a heating connection switching device 220 by a heating connection switching control of the second embodiment,
FIG. 21B is a diagram showing one state of the heating connection switching device 220 by the heating connection switching control of the second embodiment, and
FIG. 21C is a diagram showing one state of the heating connection switching device 220 by the heating connection switching control of the second embodiment.

### Description of Embodiments

Hereinafter, embodiments are described. Note that although an electrically assisted bicycle is described as an example of an electrically assisted vehicle in the embodiments, the present invention is not limitedly applied to electrically assisted bicycles and can be also applied to other types of vehicles with auxiliary power such as electrically assisted wheelchairs. In the following description, common or similar constituent elements are denoted by the same or similar reference signs.

### [First Embodiment]

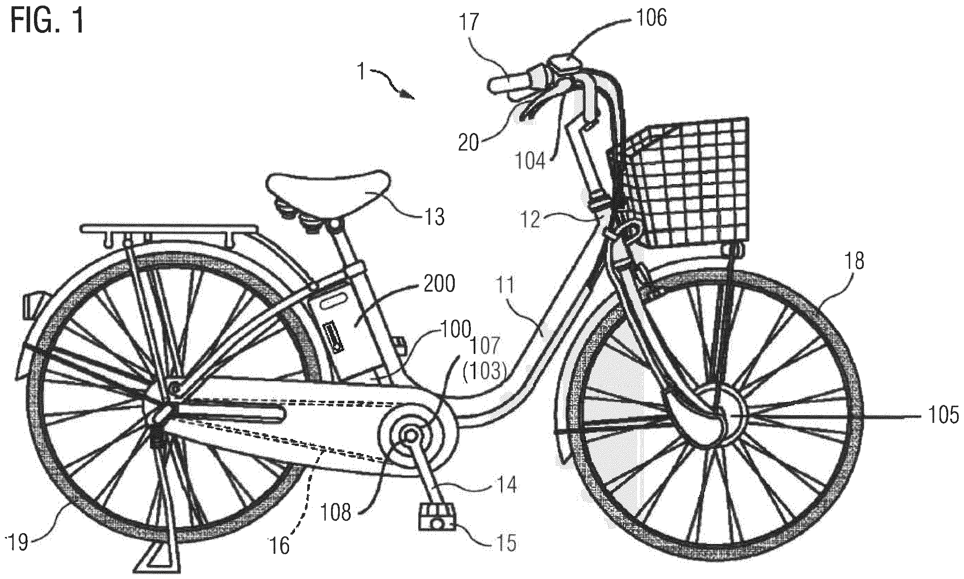

FIG. 1 shows the external appearance of an electrically assisted bicycle 1. As shown in FIG. 1, the electrically assisted bicycle 1 includes a frame 11, a front pipe 12, a saddle 13, cranks 14, pedals 15, a chain 16, a handle 17, a front wheel 18, a rear wheel 19, a battery pack 200 with a built-in electricity storage element 201 (described later) such as a secondary battery, a motor drive control device 100 and a motor 105 (electric motor). Note that the battery pack 200 is an example of an electricity storage device.

As shown in FIG. 1, the handle 17 is attached to one end of the frame 11 via the front pipe 12. The saddle 13 is attached to the other end of the frame 11.

A brake lever 20, a brake sensor 104 for detecting the operation of the brake lever 20 and an operation panel 106 are attached to the handle 17.

The cranks 14 configured to rotate with a crankshaft 108 as an axis of rotation are attached to the frame 11. The cranks 14 are rotated by pedal forces of a driver acting thereon via the pedals 15. A torque sensor 107 for detecting a torque generated on the crank 14 by the pedaling of the pedal 15 by the driver is provided on the crank 14.

The frame 11 includes a frame temperature sensor 103 for measuring a temperature of the frame 11. Note that if the torque sensor 107 has a function of a temperature sensor, this temperature sensor may be used as the frame temperature sensor 103. In this embodiment, it is assumed that the temperature sensor of the torque sensor 107 is used as the frame temperature sensor 103.

The front wheel 18 is provided on a lower end of the front pipe 12. The motor 105 is built in a part serving as a hub of the front wheel 18. The front wheel 18 is rotationally driven by the motor 105. The motor 105 is assumed to be a brushless direct-current motor below, but the motor 105 may be another type of motor.

The rear wheel 19 arranged opposite to the front wheel 18 across the cranks 14 is rotationally driven via the chain 16 mounted between the rear wheel 19 and the cranks 14. The cranks 14, the chain 16 and the rear wheel 19 constitute a human power drive mechanism. Note that the human power drive mechanism may include a transmission mechanism. The chain 16 may be a driving belt.

The battery pack 200 is detachably disposed below the saddle 13 between the frame 11 and the rear wheel 19 of the electrically assisted bicycle 1. The motor drive control device 100 as an example of a drive device is provided between the battery pack 200 and the saddle 13. The motor drive control device 100 mainly functions as a drive control unit for controlling the drive (assisting operation) of the motor 105 by power supplied from the battery pack 200 and a regeneration control unit for charging the battery pack 200 (electricity storage element 201) (hereinafter, also referred to as regenerative charging) by power generated during a regenerating operation of the motor 105.

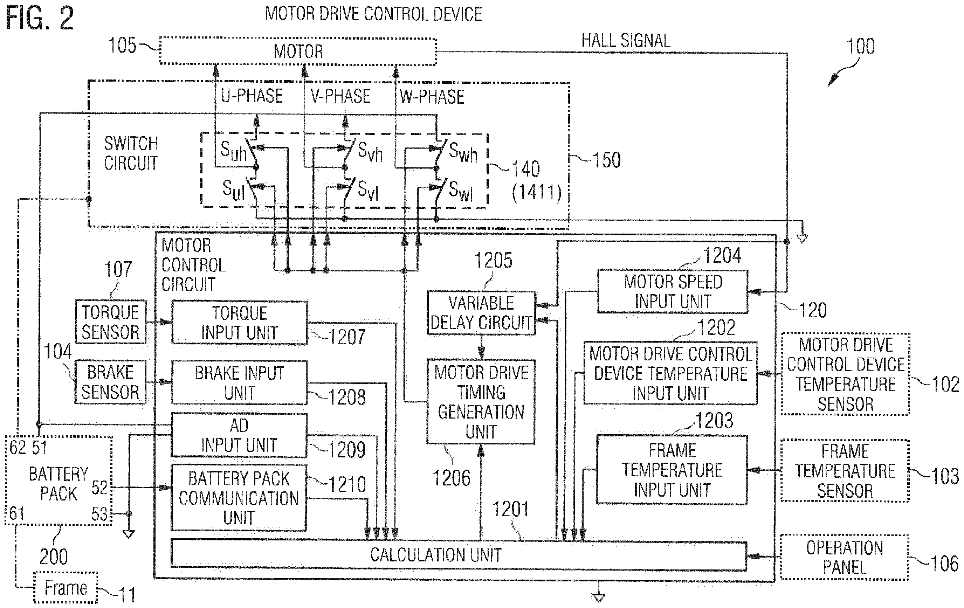

FIG. 2 shows the configuration (block diagram) of the motor drive control device 100. As shown in FIG. 2, the motor drive control device 100 includes a switch circuit 140, a motor control circuit 120 and a thermal conductor 150.

The switch circuit 140 functions as an inverter for supplying a three-phase alternating current based on a direct current from the battery pack 200 to a winding of the motor 105 during the drive of the motor 105 (during the assisting operation) and functions as a converter for supplying a direct current obtained by converting an electromotive force of the motor 105 to the battery pack 200 during the regenerating operation. As shown in FIG. 2, the switch circuit 140 includes six switching elements 1411 (a high-side switch (Sᵤₕ) and a low-side switch (Sᵤₗ) for switching for a U-phase of the motor 105, a high-side switch (Sᵥₕ) and a low-side switch (Sᵥₗ) for switching for a V-phase of the motor 105 and a high-side switch (S_{wh}) and a low-side switch (S_{wl}) for switching for a W-phase of the motor 105) constituting bridge circuits in correspondence with the U-, V- and W-phases of the motor 105. Each switch element 1411 is configured, for example, using a FET (Field Effect Transistor). The switch circuit 140 constitutes, for example, a part of a complementary type switching amplifier. Each switch element 1411 is turned on/off, for example, by a PWM (Pulse Width Modulation) control.

The thermal conductor 150 is configured, for example, using a substance having a high thermal conductivity such as metal. The thermal conductor 150 is provided for the purpose of heat exchange between the motor drive control device 100 and the battery pack 200. The thermal conductor 150 is provided, for example, near the switching elements 1411 described above or near a part where the motor drive control device 100 easily generates heat such as an easily heat-generating element of the motor control circuit 120. The thermal conductor 150 is thermally connected to a later-described external connection terminal 62 of the battery pack 200 when the battery pack 200 is mounted on the electrically assisted bicycle 1. Note that, in this embodiment, thermal connection of two members means connection in a state where terminal conduction is effectively possible between the both members.

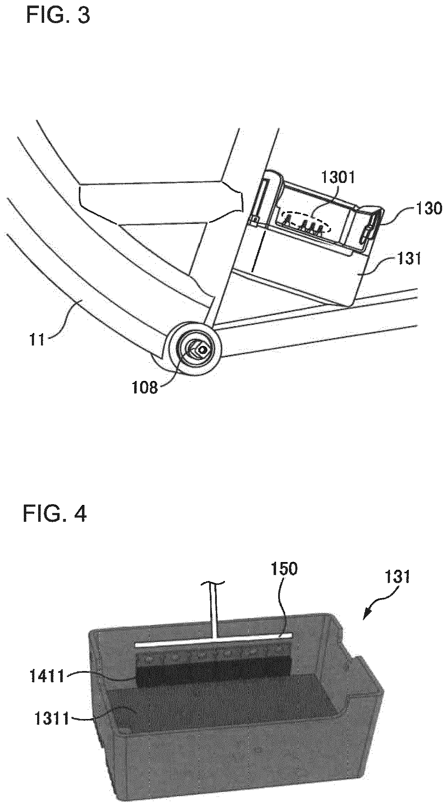

FIG. 3 shows an example of mounting the motor control circuit 120 on the electrically assisted bicycle 1. As shown in FIG. 3, a connector base 130 serving as a base on which the battery pack 200 is to be mounted is provided near a part of the frame 11 where the crankshaft 108 is provided. A hollow board case 131 having a substantially rectangular parallelepiped shape is disposed below the connector base 130. Main elements of the motor control circuit 120 are housed in this board case 131.

A plurality of terminals 1301 respectively corresponding to later-described five external connection terminals 51 to 53, 61 and 62 of the battery pack 200 are provided on the connector base 130. Out of these, the terminal to be connected to the external connection terminal 61 of the battery pack 200 is thermally connected to the frame 11. Note that this terminal may be thermally connected, for example, to a predetermined part (seat tube (not shown)), hanger pipe (not shown), chain stay (not shown), front pipe 12 or the like) of the electrically assisted bicycle 1 other than the frame 11.

FIG. 4 is a perspective view showing an internal state of the board case 131 obliquely viewed from above the board case 131. As shown in FIG. 4, a circuit board 1311 of the motor control circuit 120 is housed inside the board case 131. Further, the switch elements 1411 constituting the switch circuit 140 are disposed on an inner side surface of the board case 131 with heat radiating surfaces thereof held in contact with this side surface. In this example, the thermal conductor 150 is provided to at least partially pass through the vicinity of the switch elements 1411.

Referring back to FIG. 2, the motor control circuit 120 controls the motor 105 according to output signals of the brake sensor 104 and the torque sensor 107. As shown in FIG. 2, the motor control circuit 120 includes a calculation unit 1201, a motor drive control device temperature input unit 1202, a frame temperature input unit 1203, a motor speed input unit 1204, a variable delay circuit 1205, a motor drive timing generation unit 1206, a torque input unit 1207, a brake input unit 1208, an AD input unit 1209 and a battery pack communication unit 1210.

The calculation unit 1201 includes a central processor (CPU (Central Processing Unit), MPU (Micro Processing Unit) or the like) and a storage device (ROM (Read Only Memory), RAM (Random Access Memory), NVRAM (Non-Volatile RAM) or the like). The calculation unit 1201 controls the motor 105 (drive control, regeneration control) based on various input signals. Further, the calculation unit 1201 executes a heating connection switching control to be described later based on various input signals. Note that functions of the calculation unit 1201 are realized, for example, by the central processor of the calculation unit 1201 reading and implementing a program stored in the storage device of the calculation unit 1201.

The motor speed input unit 1204 detects a rotational speed of the motor 105 based on a signal of a Hall element (Hall signal) for detecting a position of a magnetic pole position of a rotor of the motor 105 and outputs the detected rotational speed to the calculation unit 1201.

The torque input unit 1207 receives a torque signal indicating a torque acting on the crank 14 from the torque sensor 107 and digitizes and outputs the received torque signal to the calculation unit 1201. The calculation unit 1201 utilizes the received torque signal, for example, in determining whether or not the regenerating operation is possible.

The brake input unit 1208 digitizes a signal indicating the presence or absence of braking from the brake sensor 104 and outputs the digitized signal to the calculation unit 1201. The calculation unit 1201 starts the regenerating operation, for example, when the above braking signal is input.

The AD input unit 1209 measures an output voltage of the battery pack 200 and outputs a signal indicating the measured voltage to the calculation unit 1201. The calculation unit 1201 executes a charge/discharge control (control to suppress excessive charging, control to suppress excessive discharging, etc.) of the battery pack 200 according to a value of the above input voltage signal.

The operation panel 106 provides a user interface used by a user to set and monitor a state of the electrically assisted bicycle 1. The operation panel 106 includes, for example, an input unit (operation button, etc.) for allowing the user to change an operation mode (strong assist mode: mode in which assist by a drive force is prioritized, middle assist mode: mode in which assist by a drive force and the regenerating operation are balanced, weak assist mode: mode in which a chance of the regenerating operation is increased, etc.) and to turn on and off a headlight, a display unit (LCD (Liquid Crystal Display), LED (Light Emitting Diode), etc.) for displaying a vehicle speed, a remaining amount of the battery pack 200, information on whether or not the headlight is on, and the operation mode. The calculation unit 1201 receives the input of an operation performed on the operation panel 106 by the user. Further, the calculation unit 1201 displays the information on whether or not the headlight is on and a total amount of electric energy (battery remaining amount) stored in the battery pack 200 on the display panel 106.

The battery pack communication unit 1210 includes a communication interface such as an SM bus (System Management Bus), I2C (Inter-Integrated Circuit) or the like, and communicates with the battery pack 200 via this communication interface. The battery pack communication unit 1210 obtains information of the battery pack 200 (e.g. a temperature of the electricity storage element 201 built in the battery pack 200 (hereinafter, also referred to as a battery temperature (electricity storage element temperature))) and outputs the obtained temperature to the calculation unit 1201. If the battery pack 200 includes a plurality of electricity storage elements 201, the battery temperature is, for example, a minimum or maximum value of temperatures of the plurality of electricity storage elements 201.

When receiving a signal from the motor drive control device temperature sensor 102 (hereinafter, also referred to as a motor drive control device temperature), the motor drive control device temperature input unit 1202 outputs the received motor drive control device temperature to the calculation unit 1201.

When receiving a signal from the frame temperature sensor 103 (hereinafter, also referred to as a frame temperature), the frame temperature input unit 1203 outputs the received frame temperature to the calculation unit 1201.

The calculation unit 1201 receives the output signals of the operation panel 106, the motor speed input unit 1204, the torque input unit 1207, the brake input unit 1208 and the AD input unit 1209, performs a predetermined calculation, outputs an instruction signal to the motor drive timing generation unit 1206 and the variable delay circuit 1205, and controls the drive (assisting operation) of the motor 105 and the regenerating operation of the motor 105. For example, the calculation unit 1201 determines an operation of the brake lever 20 grasped from the input signal from the brake sensor 104, and controls the regenerating operation if the braking operation has been performed. A braking force obtained by the regenerating operation (hereinafter, also referred to as a regeneration amount) is controlled according to the vehicle speed. Further, the calculation unit 1201 controls the regeneration amount according to the battery temperature.

The variable delay circuit 1205 adjusts a phase of the Hall signal received from the Hall element of the motor 105 based on the instruction signal (advance value, etc.) received from the calculation unit 1201, and outputs the adjusted Hall signal to the motor drive timing generation unit 1206.

The calculation unit 1201 outputs a calculation result, e.g. a PWM code equivalent to a PWM duty ratio, to the motor drive timing generation unit 1206.

The motor drive timing generation unit 1206 generates a switching signal based on the adjusted Hall signal from the variable delay circuit 1205 and the PWM code from the calculation unit 1201, and outputs the generated switching signal to the switch elements 1411 of the switch circuit 140. Note that a basic motor drive operation is also described, for example, in the pamphlet of International Publication No. 2012/086459 and the like.

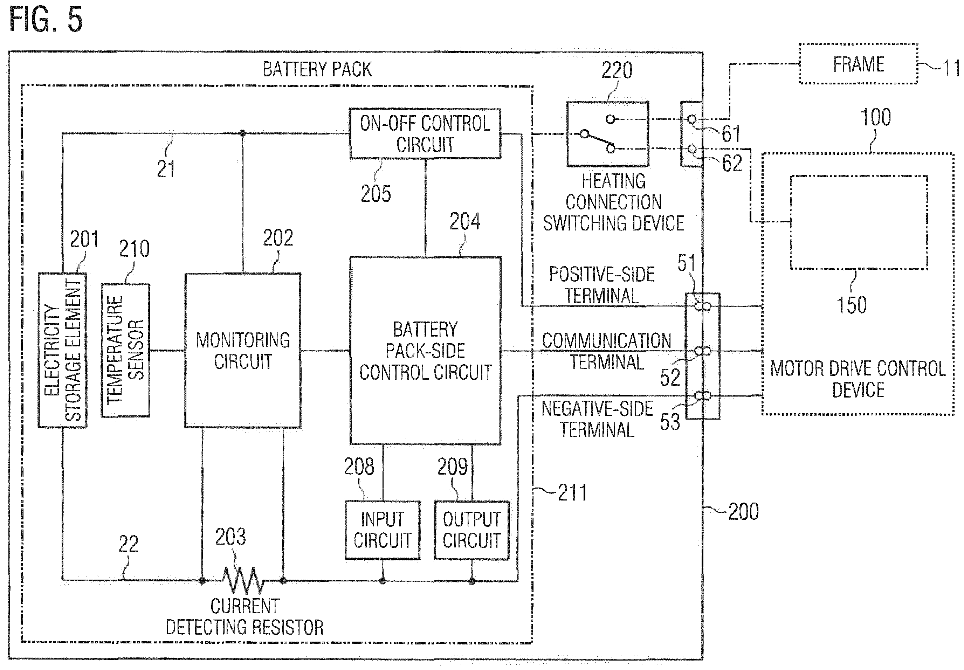

FIG. 5 shows the configuration (block diagram) of the battery pack 200. As shown in FIG. 5, the battery pack 200 includes the electricity storage element 201, a monitoring circuit 202, a current detecting resistor 203, a battery pack-side control circuit 204, an on-off control circuit 205, an input circuit 208, an output circuit 209, a temperature sensor 210, a thermal conductor 211, a heating connection switching device 220 and the external connection terminals 51 to 53, 61 and 62.

The electricity storage element 201 is, for example, a lithium ion secondary battery, but may be a lithium ion polymer secondary battery, a nickel hydrogen battery or the like. The battery pack 200 includes a plurality of electricity storage elements 201 connected, for example, in series or in parallel to obtain a necessary output voltage.

The temperature sensor 210 is configured, for example, using a thermistor and measures a temperature of the electricity storage elements 201 (or near the electricity storage elements 201).

The monitoring circuit 202 obtains an inter-terminal voltage of the electricity storage elements 201, an output voltage (voltage between a positive-side line 21 and a negative-side line 22) of the battery pack 200, an output current or charging current (current detected by the current detecting resistor 203) of the battery pack 200, the temperature input from the temperature sensor 210 and the like and outputs the obtained values to the battery pack-side control circuit 204.

The battery pack-side control circuit 204 includes a central processor (CPU, MPU or the like) and a storage device (ROM, RAM, NVRAM or the like). The battery pack-side control circuit 204 on-off controls protection elements to be described later based on signals input from the monitoring circuit 202, the input circuit 208 or the communication terminal 52.

The on-off control circuit 205 includes the protection elements (discharge control element, charge control element, etc.) provided in the positive-side line 21 of the electricity storage elements 201 and turns on and off the protection elements according to a control signal input from the battery pack-side control circuit 204.

The input circuit 208 is an interface for receiving the input of a user operation and, for example, composed of operation buttons, push switches and the like. The output circuit 209 is a user interface for providing information to the user and, for example, configured using one or more light emitting diodes (LEDs).

The thermal conductor 211 is configured, for example, using a substance having a high thermal conductivity such as metal. The thermal conductor 211 is so provided that at least a part thereof can efficiently exchange heat with the electricity storage elements 201. When having a temperature higher than the electricity storage elements 201, the thermal conductor 211 acts to increase the temperature of the electricity storage elements 201 by supplying heat to the electricity storage elements 201. When having a temperature lower than the electricity storage elements 201, the thermal conductor 211 acts to decrease the temperature of the electricity storage elements 201 by absorbing heat from the electricity storage elements 201. A part of the thermal conductor 211 is thermally connected to the heating connection switching device 220.

The heating connection switching device 220 switches the thermal connection destination of the thermal conductor 211 to any one of the frame 11, the motor drive control device 100 and open (no connection). The heating connection switching device 220 is configured, for example, using one or more electrical relays. Note that an electrical relay device using a metal having a high thermal conductivity as a contact point is preferably used. Further, the electrical relay device used is preferably the one capable of efficiently thermally connecting two members when being turned on and reliably thermally disconnecting the two members when being turned off.

One of two terminals of the heating connection switching device 220 serving as switching destinations of the terminal connected to the thermal conductor 211 is thermally connected to the external connection terminal 61 of the battery pack 200, and the other is thermally connected to the external connection terminal 62 of the battery pack 200.

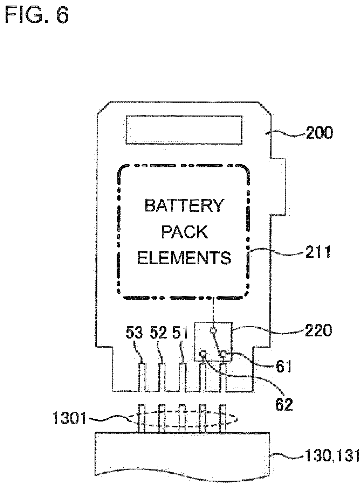

FIG. 6 shows a configuration example of the battery pack 200 and the connector base 130. In this example, the heating connection switching device 220 is provided near the external connection terminals 51 to 53, 61 and 62 of the battery pack 200. The external connection terminals 51 to 53 of the battery pack 200 are electrically connected to the circuit board 1311 and the like of the motor drive control device 100 via corresponding terminals of a terminal group 1301 of the connector base 130. With the battery pack 200 connected to the connector base 130, the external connection terminal 61 of the battery pack 200 is thermally connected to the frame 11 via the corresponding terminal of the terminal group 1301. Further, the external connection terminal 62 of the battery pack 200 is thermally connected to the thermal conductor 150 of the motor drive control device 100 via the corresponding terminal of the terminal group 1301.

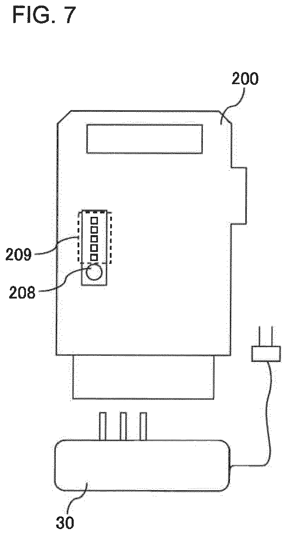

FIG. 7 is an external view showing a state where a charger 30 used to charge the battery pack 200 and the battery pack 200 are connected. The charger 30 includes a power supply circuit for generating a direct-current charging current based on an alternating current from a commercial power supply, a current detecting resistor, a shut-off switch and the like. The charger 30 executes a charging control by a constant voltage constant current (CVCC) power supply control while monitoring a charging voltage and a charging current of the battery pack 200.

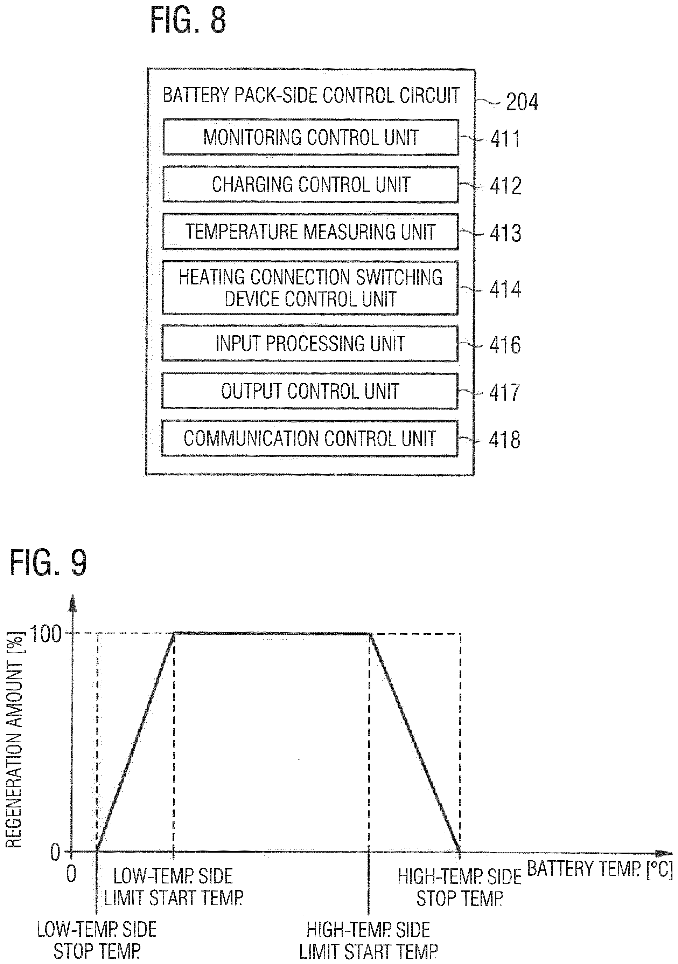

FIG. 8 shows functions of the battery pack-side control circuit 204 shown in FIG. 5 and data stored in the battery pack-side control circuit 204. As shown in FIG. 8, the battery pack-side control circuit 204 has functions of a monitoring control unit 411, a charging control unit 412, a temperature measuring unit 413, a heating connection switching device control unit 414, an input processing unit 416, an output control unit 417 and a communication control unit 418. These functions are realized, for example, by the central processor of the battery pack-side control circuit 204 reading and implementing a program stored in the storage device of the battery pack-side control circuit 204 or, for example, by hardware provided in the battery pack-side control circuit 204.

The monitoring control unit 411 on-off controls the protection elements based on a measurement value input from the monitoring circuit 202. The monitoring control unit 411 monitors, for example, temperature abnormalities of the electricity storage elements 201 and the protection elements, excessive charging and excessive discharging of the electricity storage elements 201, an overcurrent at the time of charging and an overcurrent at the time of discharging, and turns off the protection elements when detecting any abnormality.

The charging control unit 412 executes a charging control of the electricity storage elements 201 (charging current control, cell balance control between the electricity storage elements 201, etc.) when charging by the charger 30 or the regenerating operation is performed.

The temperature measuring unit 413 outputs a measurement value of the temperature sensor 210 to the communication control unit 418.

The heating connection switching device control unit 414 receives an instruction sent from the calculation unit 1201 of the motor drive control device 100 via the communication control unit 418 (hereinafter, also referred to as a switching instruction), and switches the connection destination of the thermal conductor 211 by controlling the heating connection switching device 220 according to the received switching instruction.

The communication control unit 418 communicates with the motor drive control device 100 via the communication terminal 52. The communication control unit 418 notifies the temperature measured by the temperature measuring unit 413 to the motor drive control device 100.

The input processing unit 416 receives the input of an operation performed on the input circuit 208 by the user and inputs a signal corresponding to the received operation to the battery pack-side control circuit 204. The output control unit 417 outputs information to the output circuit 209.

### [Limit of Regeneration Amount]

FIG. 9 shows an example of a method for limiting the regeneration amount corresponding to the battery temperature by the calculation unit 1201 of the motor control circuit 120. The calculation unit 1201 limits the regeneration amount according to the battery temperature in this way. As shown in FIG. 9, the calculation unit 1201 stores a low-temperature side stop temperature, a low-temperature side limit temperature, a high-temperature side start temperature and a high-temperature side stop temperature. These values are determined, for example, according to the specifications of the electricity storage elements 201 of the battery pack 200. The calculation unit 1201 sets the regeneration amount to 0 % (stops the regenerating operation), for example, when the battery temperature ≤ the low-temperature side stop temperature. Further, the calculation unit 1201 increases the regeneration amount with an increase in the battery temperature (< 100 %), for example, when the low-temperature side stop temperature < the battery temperature ≤ the low-temperature side limit start temperature. Further, for example, the calculation unit 1201 maintains the regeneration amount at 100 % when the low-temperature side limit start temperature < the battery temperature < the high-temperature side limit start temperature. Further, the calculation unit 1201 decreases the regeneration amount with an increase in the battery temperature (< 100 %), for example, when the high-temperature side limit start temperature ≤ the battery temperature < the high-temperature side stop temperature. Further, the calculation unit 1201 sets the regeneration amount to 0 % (stops the regenerating operation), for example, when the high-temperature side stop temperature ≤ the battery temperature.

As just described, since the calculation unit 1201 limits the regeneration amount according to the battery temperature, the battery temperature needs to be possibly in a proper range, preferably in a range higher than the low-temperature side stop temperature and lower than the high-temperature side stop temperature (hereinafter, also referred to as a regenerative charging possible temperature range) to possibly prevent the regeneration amount from being limited during the travel of the electrically assisted bicycle 1. More preferably, the battery temperature needs to be maintained in a range higher than the low-temperature side limit start temperature and lower than the high-temperature side limit start temperature (hereinafter, also referred to as an unlimited regenerative charging possible temperature range).

Accordingly, the calculation unit 1201 generates the aforementioned switching instruction based on the battery temperature, the motor drive control device temperature and the frame temperature to possibly maintain the battery temperature in the proper range, and controls the heating connection switching device 220 via the communication control unit 418, thereby switching the connection destination of the thermal conductor 211 to any one of the motor drive control device 100, the frame 11 and open (no connection). Note that, in the following description, this switching control is referred to as a heating connection switching control and a function pertaining to the heating connection switching control executed by the calculation unit 1201 is referred to as a heating connection switching control unit.

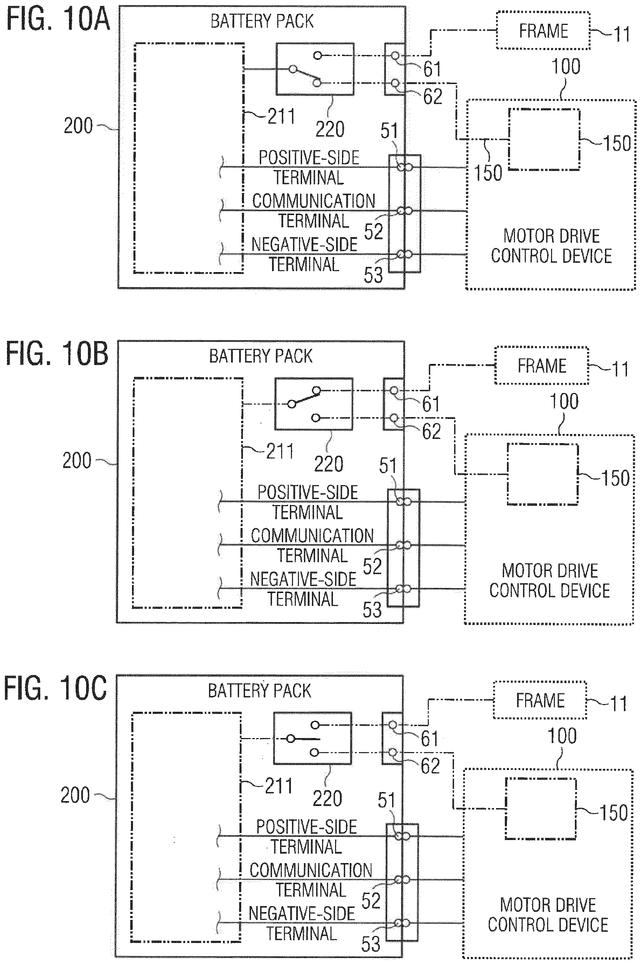

FIGS. 10A to 10C show switching modes of the heating connection switching device 220 by the heating connection switching control. FIG. 10A shows a case where the connection destination of the thermal conductor 211 is the motor drive control device 100 (thermal conductor 150), FIG. 10B shows a case where the connection destination of the thermal conductor 211 is the frame 11 and FIG. 10C shows a case where the connection destination of the thermal conductor 211 is open (no connection destination).

The calculation unit 1201 (heating connection switching control unit) appropriately switches the connection destination of the thermal conductor 211 to the motor drive control device 100 (thermal conductor 150) as shown in FIG. 10A to prevent a reduction of charge/discharge performance due to a low temperature of the electricity storage elements 201 such as in cold regions. Note that the motor drive control device 100 may have a temperature higher than the electricity storage elements 201 due to heat generation (heat generation of the switch elements 1411, etc.) when the motor 105 is driven or heat generation by short-circuit braking. By actively transferring heat generated in the motor drive control device 100 to the electricity storage elements 201 in this way, a reduction of charge/discharge performance of the electricity storage elements 201 can be prevented. Here, a braking force of the motor 105 is obtained also by the short-circuit braking, but it is difficult to stably obtain the braking force for a long time since the short-circuit braking is accompanied by large heat generation of the motor 105 and the motor drive control device 100. In contrast, in the case of ensuring charging performance by actively transferring the heat generated in the motor drive control device 100 to electricity storage elements 201 and increasing the temperature of the electricity storage elements 201 as described above, the braking force can be stably obtained for a long time and the heat generation of the motor 105 and the motor drive control device 100 can also be reduced.

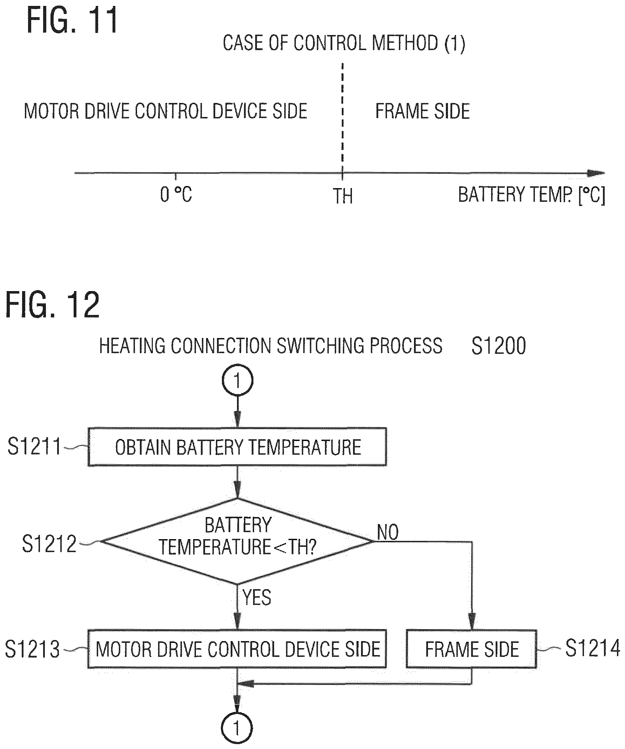

The calculation unit 1201 monitors the battery temperature and switches the connection destination of the thermal conductor 211 to the frame 11 as shown in FIG. 11, for example, to prevent the electricity storage elements 201 from reaching a high temperature to reduce charge/discharge performance such as in summer.

Note that the calculation unit 1201 prevents a temperature drop of the battery pack 200 by setting the connection destination of the thermal conductor 211 of the battery pack 200 to open (no connection destination) as shown in FIG. 10C when the temperature of the motor drive control device 100 is lower than the temperature of the battery pack 200 (electricity storage elements 201) such as when the battery pack 200 charged indoors is mounted on the electrically assisted bicycle 1 standing outdoors in a season with a low outside air temperature such as in winter.

Further, the calculation unit 1201 prevents a temperature increase of the battery pack 200 by setting the connection destination of the thermal conductor 211 of the battery pack 200 to open (no connection destination) as shown in FIG. 10C when the temperature of the frame 11 is higher than the temperature of the battery pack 200 (electricity storage elements 201) such as when the battery pack 200 charged indoors is mounted on the electrically assisted bicycle 1 standing outdoors in a season with a high outside air temperature such as in summer.

Specific examples (control methods (1) to (3)) of the heating connection switching control are described below.

### [Control Method (1)]

FIG. 11 is a graph showing the control method (1). As shown in FIG. 11, in the control method (1), the thermal connection destination of the thermal conductor 211 of the battery pack 200 is set to the motor drive control device 100 and the temperature of the battery pack 200 (electricity storage elements 201) is increased by transferring the heat of the motor drive control device 100 to the battery pack 200 if the battery temperature is lower than a threshold value TH (first predetermined value) (battery temperature < Th). On the other hand, the thermal connection destination of the thermal conductor 211 of the battery pack 200 is set to the frame 11 and the battery pack 200 (electricity storage elements 201) is cooled by allowing the heat of the battery pack 200 to escape to the frame 11 if the battery temperature is equal to or higher than the threshold value TH (battery temperature ≥ Th). Note that the threshold value TH is set, for example, within the aforementioned regenerative charging possible temperature range or unlimited regenerative charging possible temperature range (e.g. about normal temperature (≈ 20°C) (the same applies also to the control methods (2) and (3) described later).

FIG. 12 is a flow chart showing a process (hereinafter, referred to as a heating connection switching process S1200) performed by the calculation unit 1201 (heating connection switching control unit) in the control method (1). The heating connection switching process S1200 is described with reference to FIG. 12 below.

The calculation unit 1201 obtains the battery temperature in real time (S1211) and compares the battery temperature to the threshold value TH (S1212).

If the battery temperature is lower than the threshold value TH (battery temperature < TH) (S1212: YES), the calculation unit 1201 controls the heating connection switching device 220 via the battery pack communication unit 1210 to set the thermal connection destination of the thermal conductor 211 of the battery pack 200 to the motor drive control device 100 (S1213). Thereafter, the process returns to S1211.

On the other hand, if the battery temperature is equal to or higher than the threshold value TH (TH ≤ battery temperature) (S1212: NO), the calculation unit 1201 controls the heating connection switching device 220 via the battery pack communication unit 1210 to set the thermal connection destination of the thermal conductor 211 of the battery pack 200 to the frame 11 (S1214). Thereafter, the process returns to S1211.

### [Control Method (2)]

In the control method (1), the thermal connection destination of the thermal conductor 211 is switched with the threshold value TH as a boundary. In the control method (2), a hysteresis width HYS is provided for the threshold value TH to prevent chattering possibly occurring when the battery temperature is near the threshold value TH. Note that the hysteresis width HYS is set, for example, at 10°C (the same applies also to the control method (3)).

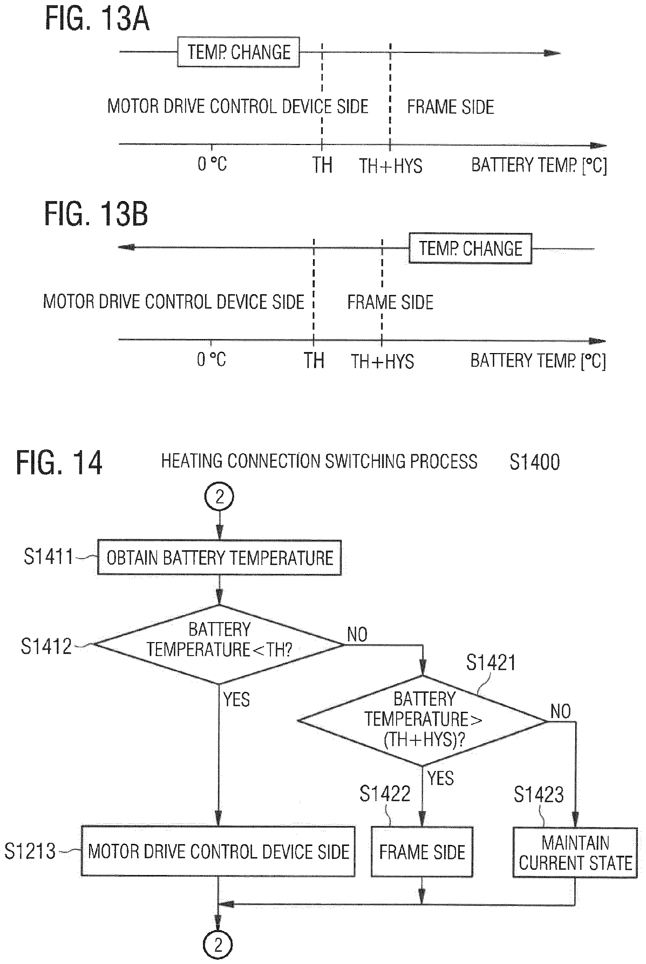

FIG. 13A is a chart showing a control method by the control method (2) when the battery temperature changes from a low temperature to a high temperature. As shown in FIG. 13A, if the battery temperature is equal to or lower than the sum of the threshold value TH set in advance and the hysteresis width (battery temperature ≤ (TH+HYS)), the thermal connection destination of the thermal conductor 211 of the battery pack 200 is set to the motor drive control device 100 and the temperature of the battery pack 200 (electricity storage elements 201) is increased by transferring the heat of the motor drive control device 100 to the battery pack 200.

On the other hand, if the battery temperature is higher than the sum of the threshold value TH set in advance and the hysteresis width (battery temperature > (TH+HYS)), the thermal connection destination of the thermal conductor 211 of the battery pack 200 is set to the frame 11 and the battery pack 200 (electricity storage elements 201) is cooled by allowing the heat of the battery pack 200 to escape to the frame 11.

FIG. 13B is a chart showing a control method by the control method (2) when the battery temperature changes from a high temperature to a low temperature. As shown in FIG 13B, if the battery temperature is equal to or higher than the threshold value TH set in advance (battery temperature ≤ TH), the thermal connection destination of the thermal conductor 211 of the battery pack 200 is set to the frame 11 and the battery pack 200 (electricity storage elements 201) is cooled by allowing the heat of the battery pack 200 to escape to the frame 11.

On the other hand, if the battery temperature is lower than the threshold value TH (battery temperature < TH), the thermal connection destination of the thermal conductor 211 of the battery pack 200 is set to the motor drive control device 100 and the temperature of the battery pack 200 (electricity storage elements 201) is increased by transferring the heat of the motor drive control device 100 to the battery pack 200.

FIG. 14 is a flow chart showing a process (hereinafter, referred to as a heating connection switching process S1400) performed by the calculation unit 1201 (heating connection switching control unit) in the control method (2). The heating connection switching process S1400 is described with reference to FIG. 14 below.

The calculation unit 1201 obtains the battery temperature in real time (S1411) and first compares the battery temperature to the threshold value TH (S1412).

If the battery temperature is lower than the threshold value TH (battery temperature < TH) (S1412: YES), the calculation unit 1201 controls the heating connection switching device 220 via the battery pack communication unit 1210 to set the thermal connection destination of the thermal conductor 211 of the battery pack 200 to the motor drive control device 100 (S1413). Thereafter, the process returns to S1411.

On the other hand, if the battery temperature is equal to or higher than the threshold value TH (TH ≥ battery temperature) (S1412: NO), the calculation unit 1201 compares the battery temperature and the sum of the threshold value TH and the hysteresis width HYS (S1421). If the battery temperature is higher than the sum of the threshold value TH and the hysteresis width HYS (battery temperature > (TH+HYS)) (S1421: YES), the calculation unit 1201 controls the heating connection switching device 220 via the battery pack communication unit 1210 to set the thermal connection destination of the thermal conductor 211 of the battery pack 200 to the frame 11 (S1422). Thereafter, the process returns to S1411. If the battery temperature is equal to or lower than the sum of the threshold value TH and the hysteresis width HYS (battery temperature ≤ (TH+HYS)) (S1421: NO), the calculation unit 1201 maintains the current state of the heating connection switching device 220 (Step S1423). Thereafter, the process returns to S1411.

### [Control Method (3)]

In the control method (3), the heating connection switching control is executed with reference to the motor drive control device temperature and the frame temperature in addition to the battery temperature.

For example, when the battery pack 200 charged indoors is mounted on the electrically assisted bicycle 1 standing outdoors in a season with a low outside air temperature such as in winter (it is assumed that the battery pack 200 is kept at a normal temperature (e.g. about 20°C)), the temperature of the motor drive control device 100 is low. If the thermal conductor 211 of the battery pack 200 is thermally connected to the motor drive control device 100, heat is deprived of by the motor drive control device 100 to decrease the temperature of the battery pack 200 and limit the regenerative charging. Accordingly, the connection destination of the thermal conductor 211 of the battery pack 200 is set to open (no connection destination) to prevent a temperature drop of the battery pack 200 when the temperature of the motor drive control device 100 is low.

Further, for example, when the battery pack 200 charged indoors is mounted on the electrically assisted bicycle 1 standing outdoors in a season with a high outside air temperature such as in summer (it is assumed that the battery pack 200 is kept at a normal temperature), the temperature of the frame 11 is high. If the thermal conductor 211 of the battery pack 200 is thermally connected to the frame 11 at this time, the temperature of the battery pack 200 increases and there is a possibility of limiting the regenerative charging. Accordingly, the connection destination of the thermal conductor 211 of the battery pack 200 is set to open (no connection destination) to prevent a temperature increase of the battery pack 200 when the temperature of the frame 11 is high.

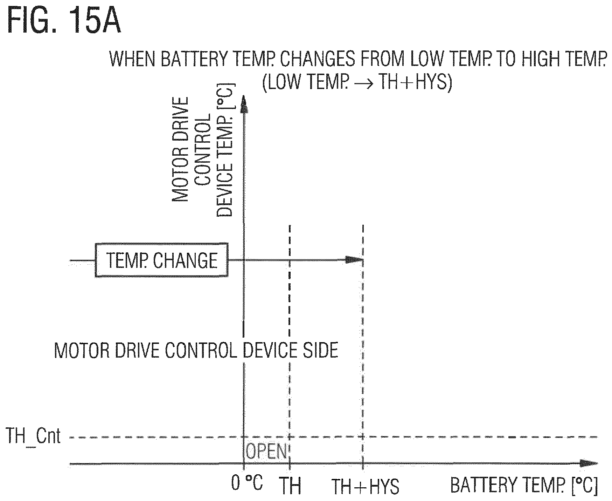

FIG. 15A is a chart showing a control method by the control method (3) when the battery temperature changes from a low temperature to a high temperature (in a range where battery temperature < (TH+HYS)). As shown in FIG. 15A, when the battery temperature changes from a low temperature to a high temperature in the range where battery temperature < (TH+HYS), the thermal connection destination of the thermal conductor 211 of the battery pack 200 is set to the motor drive control device 100 and the temperature of the battery pack 200 (electricity storage elements 201) is increased by transferring the heat of the motor drive control device 100 to the battery pack 200. However, even in that case, if the motor drive control device temperature is lower than a threshold value TH_Cnt (second predetermined value) (e.g. about 5°C) (motor drive control device temperature < TH_Cnt), the connection destination of the thermal conductor 211 of the battery pack 200 is set to open (no connection destination) to prevent a temperature drop of the battery pack 200.

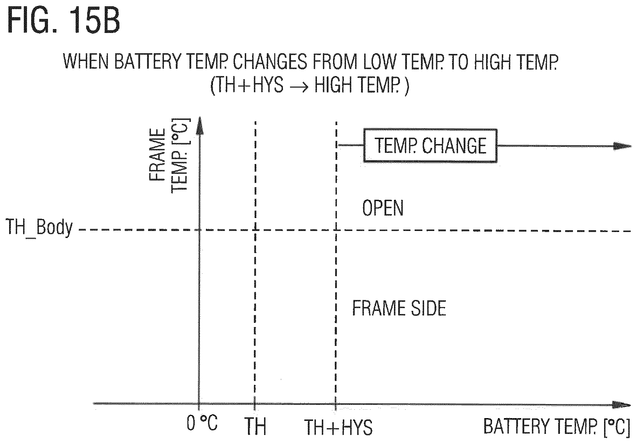

FIG. 15B is a chart showing a control method by the control method (3) when the battery temperature changes from a low temperature to a high temperature (in a range where battery temperature ≥ (TH+HYS)). As shown in FIG. 15B, when the battery temperature changes from a low temperature to a high temperature in the range where battery temperature ≥ (TH+HYS), the thermal connection destination of the thermal conductor 211 of the battery pack 200 is set to the frame 11 and the battery pack 200 (electricity storage elements 201) is cooled by allowing the heat of the battery pack 200 to escape to the frame 11. However, even in that case, if the frame temperature is higher than a threshold value TH_Body (third predetermined value) (e.g. about 50°C) (TH_Body < frame temperature), the connection destination of the thermal conductor 211 of the battery pack 200 is set to open (no connection destination) to prevent a temperature increase of the battery pack 200 due to the heat of the frame 11.

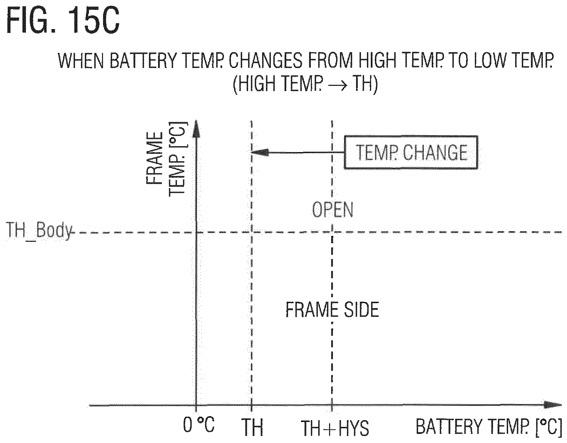

FIG 15C is a chart showing a control method by the control method (3) when the battery temperature changes from a high temperature to a low temperature (in a range where battery temperature ≥ TH). As shown in FIG. 15C, when the battery temperature changes from a high temperature to a low temperature in the range where battery temperature ≥ TH, the thermal connection destination of the thermal conductor 211 of the battery pack 200 is set to the frame 11 and the battery pack 200 (electricity storage elements 201) is cooled by allowing the heat of the battery pack 200 to escape to the frame 11. However, even in that case, if the frame temperature is higher than the threshold value TH_Body (TH_Body < frame temperature), the connection destination of the thermal conductor 211 of the battery pack 200 is set to open (no connection destination) to prevent a temperature increase of the battery pack 200 due to the heat of the frame 11.

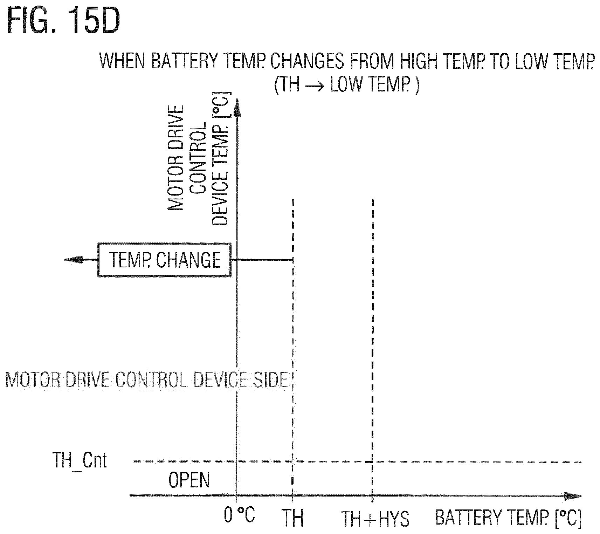

FIG. 15D is a chart showing a control method by the control method (3) when the battery temperature changes from a high temperature to a low temperature (in a range where battery temperature < TH). As shown in FIG. 15D, when the battery temperature changes from a high temperature to a low temperature in the range where battery temperature < TH, the thermal connection destination of the thermal conductor 211 of the battery pack 200 is set to the motor drive control device 100 and the temperature of the battery pack 200 (electricity storage elements 201) is increased by transferring the heat of the motor drive control device 100 to the battery pack 200. However, even in that case, if the motor drive control device temperature is lower than the threshold value TH_Cnt (e.g. about 5°C) (motor drive control device temperature ≤ TH_Cnt), the connection destination of the thermal conductor 211 of the battery pack 200 is set to open (no connection destination) to prevent a temperature drop of the battery pack 200 due to the heat deprived of by the motor drive control device 100.

Note that the current motor drive control device temperature may be, for example, used as the threshold value TH_Cnt. By doing so, if the battery temperature is lower than the motor drive control device temperature at a low temperature such as in winter, the thermal conductor 211 of the battery pack 200 is thermally connected to the motor drive control device 100 and the temperature of the battery pack 200 (electricity storage elements 201) can be increased by transferring the heat of the motor drive control device 100 to the battery pack 200.

Further, the current frame temperature may be, for example, used as the threshold value TH_Body. By doing so, if the battery temperature is higher than the frame temperature at a high temperature such as in summer, the thermal conductor 211 of the battery pack 200 is thermally connected to the frame 11 and the battery pack 200 (electricity storage elements 201) can be cooled by allowing the heat of the battery pack 200 to escape to the frame 11.

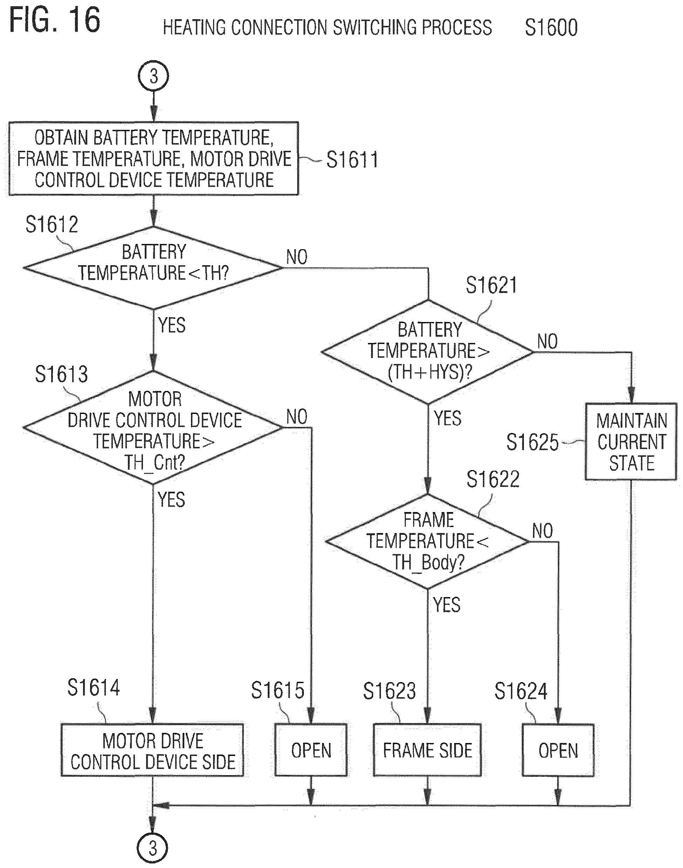

FIG. 16 is a flow chart showing a process (hereinafter, referred to as a heating connection switching process S1600) performed by the calculation unit 1201 (heating connection switching control unit) in the control method (3). The heating connection switching process S1600 is described with reference to FIG. 16 below.

The calculation unit 1201 obtains the battery temperature, the frame temperature and a vehicle body control device temperature in real time (S1611).

The calculation unit 1201 first compares the battery temperature to the threshold value TH (S1612). If the battery temperature is lower than the threshold value TH (battery temperature < TH) (S1612: YES), the process proceeds to S1613. If the battery temperature is equal to or higher than the threshold value TH (battery temperature ≥ TH) (S1612: YES), the process proceeds to S1621.

In S1613, the calculation unit 1201 determines whether or not the vehicle body control device temperature is higher than TH Cnt. When the vehicle body control device temperature is higher than TH_Cnt (vehicle body control device temperature > TH_Cnt) (S1613: YES), the calculation unit 1201 controls the heating connection switching device 220 to set the thermal connection destination of the thermal conductor 211 of the battery pack 200 to the motor drive control device 100 (S1614). Thereafter, the process returns to S1611.

On the other hand, if the vehicle body control device temperature is equal to or lower than the threshold value TH_Cnt (vehicle body control device temperature ≤ TH_Cont) (S1613: NO), the calculation unit 1201 controls the heating connection switching device 220 to set the thermal connection destination of the thermal conductor 211 of the battery pack 200 to open (no connection destination) (S1615). Thereafter, the process returns to S1611.

In S1621, the calculation unit 1201 compares the battery temperature and the sum of the threshold value TH and the hysteresis width HYS. If the battery temperature is higher than the sum of the threshold value TH and the hysteresis width HYS (battery temperature > (TH+HYS)) (S1621: YES), the process proceeds to S1622. If the battery temperature is equal to or lower than the sum of the threshold value TH and the hysteresis width HYS (battery temperature ≤ (TH+HYS)) (S1621: NO), the calculation unit 1201 maintains the current state of the heating connection switching device 220 (Step S1625). Thereafter, the process returns to S1611 (heating connection switching device 220 is maintained in the current state).

In S1622, the calculation unit 1201 compares the frame temperature to TH_Body. If the frame temperature is lower than TH_Body (frame temperature < TH_Body) (S1622: YES), the calculation unit 1201 controls the heating connection switching device 220 to set the thermal connection destination of the thermal conductor 211 of the battery pack 200 to the frame 11 (S1623). Thereafter, the process returns to S1611.

On the other hand, if the frame temperature is equal to or higher than TH_Body (frame temperature ≥ TH_Body) (S1622: NO), the calculation unit 1201 controls the heating connection switching device 220 to set the thermal connection destination of the thermal conductor 211 of the battery pack 200 to open (no connection destination) (S1624). Thereafter, the process returns to S1611.

### [Modifications]

The calculation unit 1201 may implement an appropriate combination of the three control methods (1) to (3) described above. For example, the calculation unit 1201 may perform the heating connection switching process S1600 if the battery temperature is lower than a predetermined temperature, and may perform the heating connection switching process S1400 if the battery temperature is equal to or higher than the predetermined temperature.

Further, as in comparing the battery temperature to the threshold value TH, a hysteresis width may be set to prevent chattering also in comparing the body control device temperature to TH_Cnt (S1613 of FIG. 16) and in comparing the frame temperature to TH_Body (S1622 of FIG. 16).

### =Second Embodiment=

Although the heating connection switching device 220 is provided in the battery pack 200 and controlled by the motor drive control device 100 in the first embodiment, a configuration (heating connection switching device 160) equivalent to the heating connection switching device 220 is provided in a motor drive control device 100 and the motor drive control device 100 directly controls this configuration (without via a battery pack communication unit 1210) in a second embodiment. Note that a configuration change of the existing battery pack 200 can be suppressed to a minimum level by providing the configuration (heating connection switching device 160) equivalent to the heating connection switching device 220 in the motor drive control device 100. An electrically assisted bicycle 1 of the second embodiment is described, centering on points of difference from the first embodiment.

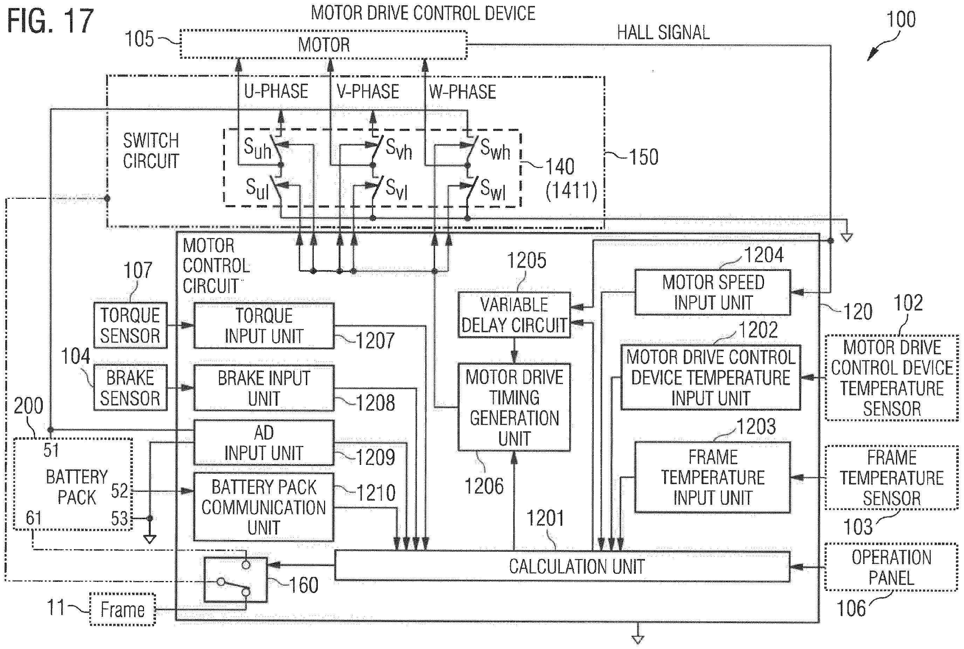

FIG 17 is a diagram showing the configuration (block diagram) of the motor drive control device 100 of the second embodiment. As shown in FIG. 17, the heating connection switching device 160 is provided in a motor control circuit 120 of the motor drive control device 100 in the second embodiment.

The heating connection switching device 160 is configured, for example, using one or more electrical relays. As in the first embodiment, a calculation unit 1201 controls the heating connection switching device 160 based on a battery temperature, a motor drive control device temperature and a frame temperature to possibly maintain the battery temperature in a proper range, and switches a connection destination of a thermal conductor 211 to any one of the motor drive control device 100, a frame 11 and open (no connection).

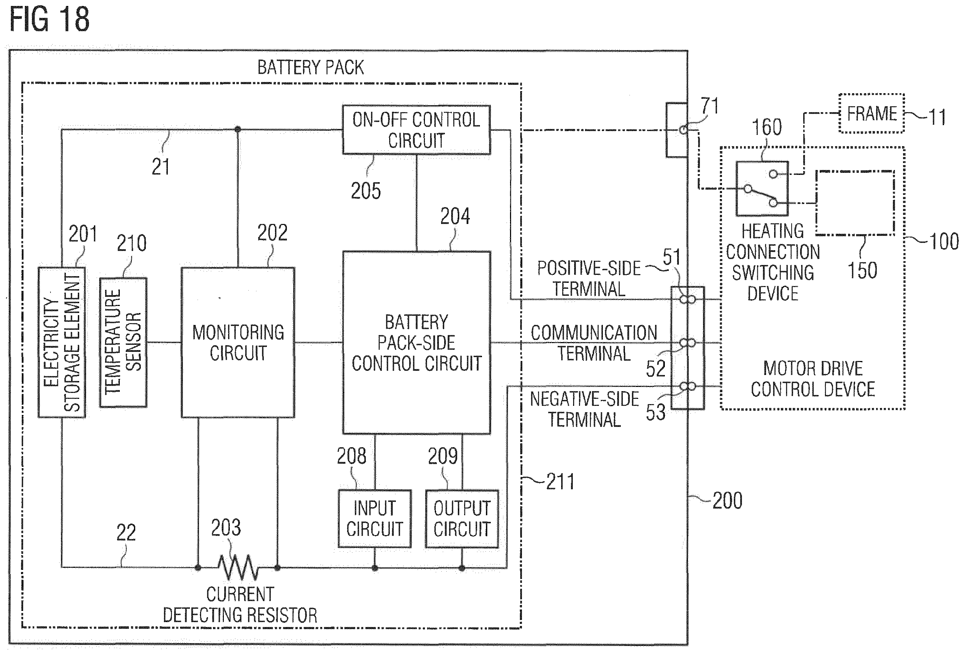

FIG. 18 shows the configuration (block diagram) of a battery pack 200 of the second embodiment. Similarly to the battery pack 200 of the first embodiment, the battery pack 200 of the second embodiment is provided with the thermal conductor 211 to be capable of efficient heat exchange with electricity storage elements 201. A part of the thermal conductor 211 is thermally connected to an external connection terminal 71 of the battery pack 70.

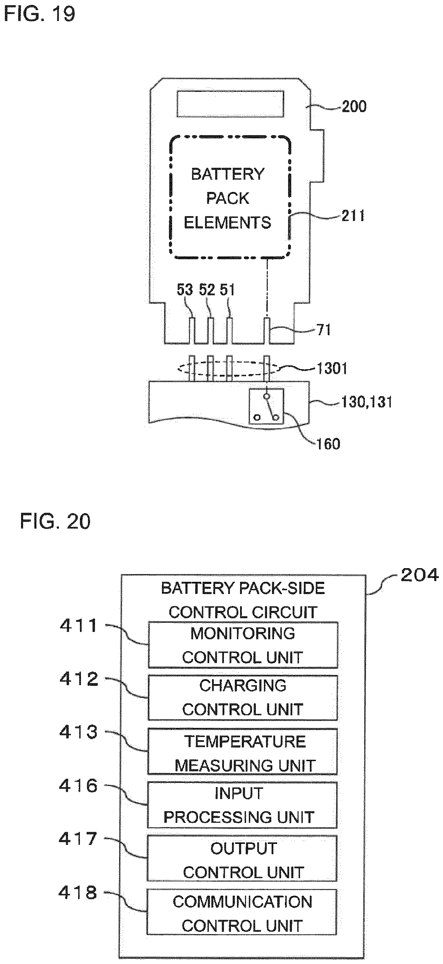

FIG 19 shows a configuration example of the battery pack 200 and a connector base 130. External connection terminals 51 to 53 of the battery pack 200 are electrically connected to a circuit board 1311 and the like of the motor drive control device 100 via corresponding terminals of a terminal group 1301 of the connector base 130. As shown in FIG 19, the heating connection switching device 160 is provided on the connector base 130 or in a board case 131 in this example. With the battery pack 200 connected to the connector base 130, the external connection terminal 71 of the battery pack 200 is thermally connected to a terminal of the heating connection switching device 160 via a corresponding terminal of the terminal group 1301 of the connector base 130.

FIG. 20 shows functions of a battery pack-side control circuit 204 of the battery pack 200 of the second embodiment and data stored in the battery pack-side control circuit 204. Unlike the battery pack-side control circuit 204 (FIG. 8) of the first embodiment, the battery pack-side control circuit 204 of the second embodiment includes no heating connection switching device control unit 414.

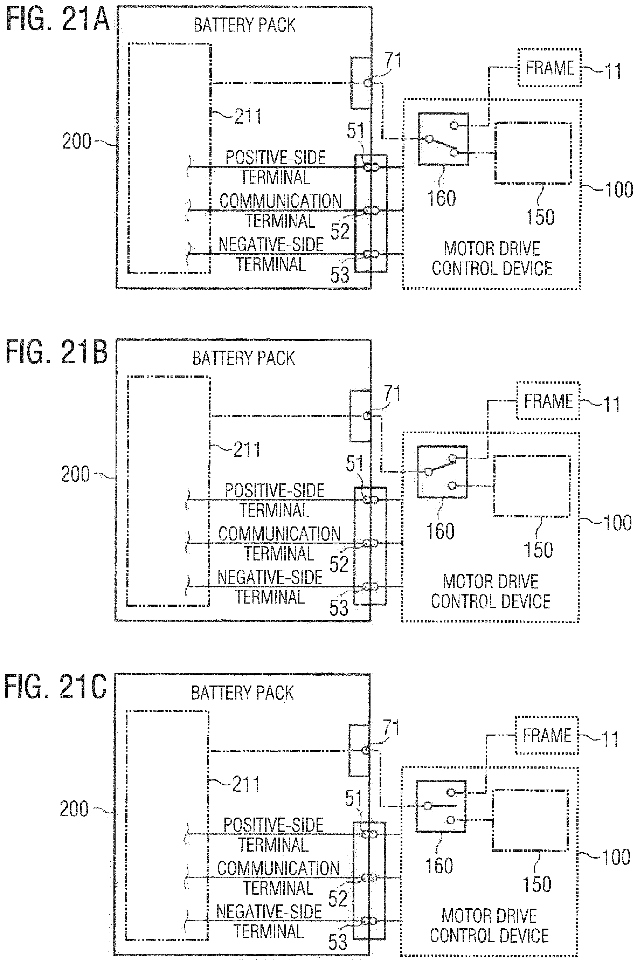

FIGS. 21A to 21C show switching modes of the heating connection switching device 220 by a heating connection switching control executed by the calculation unit 1201 (heating connection switching control unit) of the motor drive control device 100 in the second embodiment. FIG. 21A shows a case where a connection destination of the thermal conductor 211 is the motor drive control device 100 (thermal conductor 150), FIG. 21B shows a case where the connection destination of the thermal conductor 211 is the frame 11 and FIG. 21C shows a case where the connection destination of the thermal conductor 211 is open (no connection destination). Note that, also in the second embodiment, heating connection switching controls similar to the specific examples (control methods (1) to (3)) of the heating connection switching controls shown in the first embodiment can be executed by the calculation unit 1201 (heating connection switching control unit) of the motor drive control device 100 controlling the heating connection switching device 160.

### [Summary]

As described in detail above, in the electrically assisted bicycles 1 of the embodiments, if the battery temperature is at the threshold value TH, the temperature of the electricity storage elements 201 is increased utilizing the heat of the motor drive control device 100, whereby it can be prevented that the electricity storage elements 201 reach a low temperature to reduce charge/discharge performance and a braking force by a drive force and regeneration can be stably obtained by maintaining the electricity storage elements 201 in the proper temperature range.

Further, in the electrically assisted bicycle 1, the electricity storage elements 201 and the motor drive control device 100 are thermally separated when the battery temperature is equal to or higher than the threshold value TH. Thus, it can be prevented that the electricity storage elements 201 reach a high temperature due to the heat of the motor drive control device 100 to reduce charge/discharge performance.

Further, in the electrically assisted bicycle 1, the electricity storage elements are thermally connected to the frame 11 to allow the escape of the heat of the electricity storage elements 201 when the battery temperature is equal to or higher than the threshold value TH. Thus, it can be prevented that the electricity storage elements 201 reach a high temperature to reduce charge/discharge performance. Note that an electrically assisted vehicle is required to be light in weight since being driven by human power and auxiliary power. According to this configuration, a mechanism for cooling the electricity storage elements by a simple method can be realized without adding a configuration leading to a weight increase such as a cooling fan or a water cooling type cooling device.

Further, in the electrically assisted bicycle 1, the electricity storage elements 201 and the motor drive control device 100 are thermally separated when the motor drive control device temperature is low (equal to or lower than the threshold value TH_Cnt). Thus, when the motor drive control device temperature is low like in winter, it can be prevented that the motor drive control device 100 is thermally connected to decrease the temperature of the electricity storage elements 201 and reduce charge/discharge performance.

Further, in the electrically assisted bicycle 1, the electricity storage elements 201 and the motor drive control device 100 are thermally separated when a predetermined part temperature is high (equal to or higher than the threshold value TH_Body). Thus, when the temperature of a predetermined part is high like in summer, it can be prevented that the electricity storage elements 201 reach a high temperature to reduce charge/discharge performance by being thermally connected to the predetermined part.

Although the embodiments of the present invention have been described above, the present invention is not limited to these. The material, shape and arrangement of each member described above are merely the embodiments for carrying out the present invention and various changes can be made without departing from the gist of the present invention.

### Reference Signs List

1 electrically assisted bicycle, 11 frame, 61 external connection terminal, 62 external connection terminal, 100 motor drive control device, 102 motor drive control device temperature sensor, 103 frame temperature sensor, 104 brake sensor, 105 motor, 107 torque sensor, 120 motor control circuit, 130 connector base, 131 board case, 140 switch circuit, 1411 switch element, 150 thermal conductor, 160 heating connection switching device, 200 battery pack, 201 electricity storage element, 211 thermal conductor, 220 heating connection switching device, 414 heating connection switching device control unit, 1201 calculation unit, 1202 motor drive control device temperature input unit, 1203 frame temperature input unit, 1207 torque input unit, 1208 brake input unit, 1209 AD input unit, 1210 battery pack communication unit, S1200 heating connection switching process, S1400 heating connection switching process, S1600 heating connection switching process

## Claims

1. A drive device for electrically assisted vehicle, comprising:
a motor drive control device for driving a motor provided in an electrically assisted vehicle by power stored in an electricity storage element and charging the electricity storage element by power generated during a regenerating operation of the motor;
an electricity storage element temperature acquisition unit for obtaining an electricity storage element temperature which is a temperature of the electricity storage element;
a heating connection switching device for thermally connecting or separating the electricity storage element and the motor drive control device; and
a heating connection switching control unit for controlling the heating connection switching device to thermally connect the electricity storage element to the motor drive control device when the electricity storage element temperature is lower than a first predetermined value.

2. The drive device for electrically assisted vehicle according to claim 1, wherein the heating connection switching control unit controls the heating connection switching device to thermally separate the electricity storage element and the motor drive control device when the electricity storage element temperature is equal to or higher than the first predetermined value.

3. The drive device for electrically assisted vehicle according to claim 2, wherein the heating connection switching control unit controls the heating connection switching device to thermally connect the electricity storage element and a predetermined part of the electrically assisted vehicle when the electricity storage element temperature is equal to or higher than the first predetermined value.

4. The drive device for electrically assisted vehicle according to claim 2, wherein the heating connection switching control unit controls the heating connection switching device to thermally separate the electricity storage element and the motor drive control device when the electricity storage element temperature is equal to or higher than the sum of the first predetermined value and a predetermined hysteresis width value.

5. The drive device for electrically assisted vehicle according to claim 1, further comprising a motor drive control device temperature acquisition unit for obtaining a motor drive control device temperature which is a temperature of the motor drive control device, wherein:
the heating connection switching control unit controls the heating connection switching device to thermally separate the electricity storage element and the motor drive control device when the electricity storage element temperature is lower than the first predetermined value and the motor drive control device temperature is equal to or lower than a second predetermined value.

6. The drive device for electrically assisted vehicle according to claim 3, further comprising a predetermined part temperature acquisition unit for obtaining a predetermined part temperature which is a temperature of the predetermined part, wherein:
the heating connection switching control unit controls the heating connection switching device to thermally separate the electricity storage element and the predetermined part when the electricity storage element temperature is equal to or higher than the first predetermined value and the predetermined part temperature is equal to or higher than a third predetermined value.

7. The drive device for electrically assisted vehicle according to claim 3, further comprising a predetermined part temperature acquisition unit for obtaining a predetermined part temperature which is a temperature of the predetermined part, wherein:
the heating connection switching control unit controls the heating connection switching device to thermally separate the electricity storage element and the predetermined part when the electricity storage element temperature is equal to or higher than the sum of the first predetermined value and a predetermined hysteresis width value and the predetermined part temperature is equal to or higher than a third predetermined value.

8. The drive device for electrically assisted vehicle according to claim 1, wherein:
the electricity storage element has a regenerative charging possible temperature range which is a temperature range where charging by the regeneration control unit is possible; and
the first predetermined value is set in the regenerative charging possible temperature range.

9. The drive device for electrically assisted vehicle according to claim 1, comprising the heating connection switching device.

10. An electrically assisted vehicle, comprising the drive device according to any one of claims 1 to 10.

11. An electricity storage device, comprising the electricity storage element and the heating connection switching device according to claim 1.
